# EUROPÄISCHE PATENTSCHRIFT

(11) **EP 0 444 479 B1**
(45) Veröffentlichungstag und Bekanntmachung des Hinweises auf die Patenterteilung: **28.05.1997**
(21) Anmeldenummer: 91102077.4
(22) Anmeldetag: 14.02.1991
(51) Int. Cl.: H04Q 7/10, G08B 3/10

(54) **Verfahren für einen Mehrwertdienst für ein Nachrichtenübertragungssystem mit drahtgebundenen Kanälen und/oder Funkkanälen**
Method for a value-added service for a communication system with wired and/or wireless channels
Procédé pour service à valeur ajoutée pour un système de communication avec canaux câblés ou radio

(30) Priorität: 24.02.1990 DE 4005913
(43) Veröffentlichungstag der Anmeldung: 04.09.1991
(73) Patentinhaber: GRUNDIG Aktiengesellschaft, 90762 Fürth (DE)
(72) Erfinder: Saller, Herbert, Grundig Aktiengesellschaft, 90762 Fuerth (DE)

(56) Entgegenhaltungen:
- WO-A-88/09104
- DE-A- 3 431 726

## Beschreibung

Die Erfindung betrifft einen Mehrwertdienst für ein Nachrichtenübertragungssystem mit drahtgebundenen Kanälen und/oder Funkkanälen gemäß dem Oberbegriff des Patentanspruchs 1.

Mit Mehrwertdiensten soll nicht nur die Nutzung eines Nachrichtenübertragungssystem für den Teilnehmer attraktiver gestaltet, sondern meist auch die Verkehrsgüte erhöht werden. Untersuchungen z.B. beim Autotelefonsystem haben ergeben, daß nur jeder dritte Verbindungsaufbau zum mobilen Teilnehmer (Autotelefon) erfolgreich ist. Mit Hilfe von vom Netzbetreiber zur Verfügung gestellten Zusatzdiensten, z.B. Rufumleitung und Sprachspeicherdienst, ließe sich nach einer Schätzung für das in der Bundesrepublik Deutschland aufgebaute C-Netz die Zahl der erfolgreichen Gesprächsverbindungen verdoppeln, sofern nur die Hälfte der Autotelefonbesitzer einen solchen Zusatzdienst buchen würde.

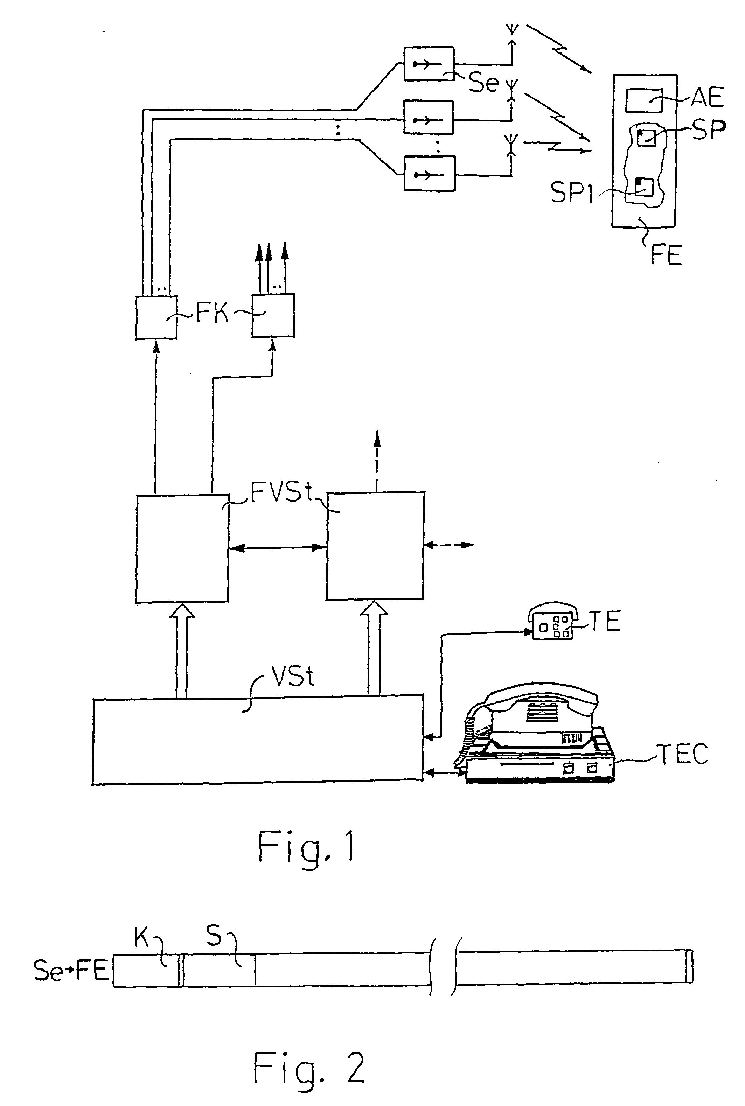

Ein weiteres Nachrichtenübertragungssystem, bei dem die Möglichkeit besteht einen Mehrwertdienst zu implementieren, ist der als City-Ruf bezeichnete Funkrufdienst, welcher in Fig. 1 dargestellt ist.

Beim City-Ruf werden kurze Informationen als Ziffern oder Texte auf der Anzeigeeinrichtung (Display) AE des Funkrufempfängers FE dargestellt. Die Informationsübermittlung ist beim City-Ruf in drei Rufklassen möglich: Nur-Ton für Ton-Funkrufempfänger FE, die entsprechend wie beim europäischen Funkrufdienst vier verabredete Signale empfangen können; Numeric für Numeric-Funkrufempfänger FE zum Empfang von bis zu fünfzehn Ziffern oder Sonderzeichen und Alphanumeric für Alphanumeric-Funkrufempfänger FE zum Empfangen von Text (Ziffern- und Buchstabenfolgen) bis zu achtzig Zeichen.

Der City-Rufdienst wird in regionalen Zonen (sog. Rufzonen) ausgestrahlt, wobei das Versorgungsgebiet in etwa den gesamten Einzugsbereich einer großen Stadt abdeckt.

Das Funkrufnetz besteht aus den Funkrufvermittlungsstellen FVSt, den Funkrufkonzentratoren FK, den Sendern Se und den Funkrufempfängern FE. Die Funkrufvermittlungsstelle FVSt verwaltet die Teilnehmerdaten und steuert die Sender S, über welche ein Ruf ausgestrahlt werden soll. Der Zugang von den öffentlichen, drahtgebundenen Telekommunikationsnetzen (über die Vermittlungsstelle VST) zum Funkrufnetz ist unter gleicher Zugangskennzahl möglich und hängt nur von der Rufklasse und dem jeweiligen Eingabegerät für die City-Ruf-Informationen oder Mehrwertdienst-Nachrichten ab. Als Eingabegeräte TE dienen die in der Teilnehmerstelle installierten Endgeräte für die
verschiedenen Postdienste, z.B. Fernsprechapparat, Telex-, Teletex- oder Btx-Endgerät. Da Numeric-Funkrufempfänger FE das Mehrfrequenz-Wählverfahren (MFV) erfordern, sind für eine Ziffern- und Texteingabe von einem einfachen Fernsprechapparat aus besondere Zusatzgeräte, z.B. akustisch ankoppelbare MFV-Geber, erforderlich. Soll von einem Personal- oder Home-Computer TEC eine alphanumerische Information eingegeben werden, so ist dieser mit einem Akustikkoppler oder Modem zu verbinden.

Der City-Ruf kann von den Teilnehmern auch grenzüberschreitend genutzt werden, beispielsweise kann der Funkrufdienst Alphapage in Frankreich, Teledrine in Italien sowie Europage in Großbritannien genutzt werden. Hierzu muß sich der City-Ruf-Teilnehmer in eine internationale europäische Rufzone einbuchen. Für die Verwendung in Funkrufsystemen wurde ein europäischer Standard gemäß "CCIR Radio Paging Code No. 1" (Pocsag-Code) vereinbart. Die Struktur des Poscag-Codes und der Aufbau der Codewörter (Adreß- und Nachrichten-Codewörter) sind an die Eigenschaften des Funkübertragungskanals angepaßt.

Beim City-Ruf liegt das Frequenzband zwischen 450 und 470 MHz und zur funktechnischen Entkopplung benachbarter Rufzonen mit denselben Frequenzen (f1 = 465,97 MHz, f2 = 466,075 MHz und f3 = 466,23 MHz) werden die Nachrichten (Funkrufe) gemäß dem Zeitschlitzverfahren übertragen. Innerhalb einer Rufzone strahlen die Sender S dieselbe Nachricht im Gleichwellenbetrieb ab. Die Dauer der Zeitschlitze ist zur Anpassung an die Verkehrsanforderungen einstellbar. Je nach gemessenem Verkehrswert werden die Funkrufe (Nachrichten) maximal dreimal gesendet. Bei Rufwiederholungen in einer Rufzone wird der Funkruf nur im selben Zeitschlitz wie bei der erstmaligen Aussendung des Funkrufs übertragen. Zum gleichen Funkrufempfänger können vor und zwischen den Rufwiederholungen neue Funkrufe gesendet werden.

Jede Aussendung eines Funkrufs (Übertragungsabschnitt, Zeitschlitz) beginnt mit einer 576 Bit langen Präambel, die aus fortlaufenden Bitwechseln besteht. Die Präambel ermöglicht eine einfache Synchronisation im Decoder des Funkrufempfängers FE auf den Bittakt. An die Präambel schließen sich Datenblöcke (batches) an, die das Synchronwort und 16 weitere Codewörter enthalten. Die Struktur der Datenblöcke (Codewortgruppe) ist derart gewählt, daß immer zwei Codewörter zu einem Rahmen (frame) zusammengefaßt werden und daß jeder Datenblock acht solcher Rahmen enthält.

Zur Wortsynchronisation wird das Synchroncodewort im Funkrufempfänger FE ausgewertet. Alle Codewörter haben ein Länge von 32 Bit. Die Frequenzen f2 und f3 werden mit einer Übertragungsrate von 1.200 Baud anstelle von 512 Baud bei der Frequenz f1 genutzt.

Es können vier Typen von Codewörtern unterschieden werden, nämlich Synchron-, Adreß-, Nachrichten- und Füllcodewort. Adreß- und Nachrichtencodewort bestehen aus einem 21 Bit umfassenden Informationsfeld und 11 Prüfbits. Die ersten zehn Prüfbits werden nach den Regeln eines CRC-Verfahrens gebildet und das elfte Bit ist ein Paritätsbit, das der Prüfung der geraden Parität des gesamten Codeworts dient. Adreß- und Nachrichtencodewort unterscheiden sich im ersten Bit. Im Adreßcodewort folgen nach dem ersten Bit weitere 18 Bits, welche dem Funkrufempfänger FE zugeordnet sind und zwei Funktionsbits, welche die Rufklasse (Nur-Ton, Numeric, Alphanumeric) kennzeichnen. Da die drei LSB-Bits des Adreß-Codeworts nicht übertragen werden, sondern die Rahmennummer definieren, in welchem das Adreß-Codewort übertragen wird, beträgt die Gesamtzahl der adressierbaren Funkrufempfänger FE über zwei Millionen.

Die Menge aller City-Rufempfänger FE ist in acht Gruppen aufgeteilt. Jeder Funkrufempfänger FE ist einer dieser acht Gruppen zugeordnet. Da der Funkrufempfänger FE nur Adreß-Codewörter in dem diesen zugeordneten Rahmen auswertet, kann zur Stromsparung der Funkrufempfänger FE während der übrigen sieben Rahmen eines Datenblocks ausgeschaltet werden. Auf diese Weise wird nicht nur der Stromverbrauch des Funkrufempfängers FE reduziert, sondern auch die Anzahl möglicher City-Ruf-Teilnehmer auf das Achtfache erhöht.

Bei einem Anruf setzt die Funkrufvermittlungsstelle FVST (Rufzentrale) die gewählte Teilnehmernummer in ein entsprechendes Codewort um und wählt zur Nachrichtenübertragung die entsprechende Rufzone sowie die Frequenz aus. Die Nachrichten-Codewörter können in jedem Rahmen übertragen werden und folgen unmittelbar dem zugeordneten Adreß-Codewort. Eine Nachricht kann dabei eine beliebige Zahl von Nachrichten-Codewörter umfassen. Wenn es sich um eine längere Nachricht handelt, setzen sich die Nachrichten-Codewörter im nächsten Datenblock fort. Die Nachricht wird im Funkrufempfänger FE wieder formatiert, bevor diese angezeigt werden kann. In der Regel werden zwei aufeinander folgende Rufe mit Nachrichten durch mindestens einen Ruf der Rufklasse Nur-Ton oder durch ein Füllwort getrennt.

Es sind bereits verschiedene mehrwertdienstfähige Funkrufempfänger vorgeschlagen worden. Diese sind beispielsweise in der EP-A1-0 155 628, EP-A1-0 186 247, EP-A1-0 189 089, EP-A2-0 228 874, EP-A2-0 280 319 oder EP-A2-0 319 219 ausführlich erläutert und beschrieben.

Grundsätzlich besteht für jeden Informationsanbieter die Möglichkeit zur Einrichtung von Mehrwertdiensten. Eines der schwierigsten Probleme die der Mehrwertdienstbetreiber zu lösen hat, ist die Regelung der Zugangsberechtigung für die Mehrwertdienstteilnehmer und die Gebührenabrechnung.

Aus der EP-A2-0 244 103 ist ein Funkrufempfänger bekannt, welcher bei fehlender Gebührenzahlung für einen Informationsdienst durch den Dienstbetreiber ferngesteuert gesperrt werden kann. Der Funkrufempfänger enthält unter anderem eine Hauptbatterie zur Stromversorgung des Funkrufempfängers und eine zweite Batterie zur Stromversorgung einer Steuerschaltung. Bei einer ersten Ausführungsform des Funkrufempfängers weist dieser eine Detektionsschaltung für zwei verschiedene Funkrufnummern auf. Aus der zweiten Funkrufnummer wird von einer Decodierschaltung ein Steuersignal abgeleitet, welches einer Halteschaltung (Speicher) zugeführt wird.

Bei einer zweiten Ausführungsform des Funkrufempfängers sind anstelle der Funkrufnummer diesem zwei verschiedene Kennungen zugeordnet. Ebenfalls wird mit Hilfe der Detektionsschaltung die Kennung ausgewertet und ein Steuersignal erzeugt.

Bei beiden Ausführungsformen soll das so ermittelte Steuersignal, welches die Empfangsberechtigung für den jeweiligen Funkrufempfänger darstellt, zuverlässig gespeichert werden. Da bei einem Wechsel der Hauptbatterie eine Löschung des gespeicherten Steuersignals erfolgen würde, ist die zweite Batterie im Funkrufempfänger angeordnet. Auch wenn der schaltungstechnische Aufwand bei dem in der EP-A2-0244103 beschriebenen Funkrufempfänger relativ hoch ist, kann ein Mißbrauch nicht zuverlässig verhindert werden. Ist beispielsweise auch die Zweitbatterie entladen, so kann der Mehrwertdienstbetreiber nicht verhindern, daß trotz fehlender Gebührenzahlung die Mehrwertdienst-Nachrichten an einer Anzeigeeinrichtung des Funkrufempfängers optisch angezeigt werden.

Weiterhin ist aus der WO-A-88/09104 ein Mehrwertdienstsystem bekannt, bei welchem eine Übertragung von durch den Mehrwertdienstbetreiber eingegebenen Steuerzeichen (Schlüssel) zur Kennzeichnung des Mehrwertdienstbetriebs und Nachrichten zu Funkrufempfängern erfolgt. Die von empfangsbereiten Funkrufempfängern empfangenen Schlüssel und Nachrichten werden decodiert und im Falle des Empfangs eines Schlüssels anstelle des konventionellen Synchronwortes, erfolgt eine Umschaltung des Funkrufempfängers auf Mehrwertdienstbetrieb. Danach können verschiedene Mehrwertdienst-Nachrichten, welche unterschiedliche Übertragungsformate aufweisen können, empfangen werden, wobei die Steuerung des Empfangs vom jeweiligen Mehrwertdienststeuersignal (M-R command code-word) abhängig ist. Diese M-R command code words entsprechen ihrer Funktion nach den Adreßcodeworten beim konventionellen Funkrufsystem mit POCSAG-Code. Die jeweiligen Mehrwertdienst-Nachrichten sind an einer Anzeigeeinrichtung des Funkempfängers optisch anzeigbar.

Der aus der WO-A-88/09104 bekannte Mehrwertdienst ist vom Systemkonzept derart ausgelegt, daß besonders ausgestalteten Funkrufempfänger, welche ein umfangreiches Arbeitsprogramm zur Erkennung und Decodierung von Mehrwertdienst-Nachrichten unterschiedlicher Übertragungsformate aufweisen, erforderlich sind.

Der Erfindung liegt die Aufgabe zugrunde, einen Mehrwertdienst für ein Nachrichtenübertragungssystem derart auszugestalten, daß ohne Änderung des bereits bestehenden Systemkonzepts für das Nachrichtenübertragungssystem auch nachträglich ein Mehrwertdienst implementiert werden kann und daß sowohl für den Mehrwertdienstbetreiber als auch für den Mehrwertdienstteilnehmer ein hoher Schutz gegen Mißbrauch erreicht wird.

Diese Aufgabe wird bei einem gattungsgemäßen Mehrwertdienst durch die kennzeichnenden Merkmale des Patentanspruchs 1 gelöst.

Der erfindungsgemäße Mehrwertdienst weist den Vorteil auf, daß ohne Änderung des bereits bestehenden Systemkonzepts für das Nachrichtenübertragungssystem auch nachträglich ein Mehrwertdienst implementiert werden kann Mehrwertdienst-Nachrichten sind beispielsweise Börsennachrichten, Sportnachrichten, Warninformationen, Verkehrshinweise usw.. Dadurch, daß der Schlüssel in jeder Mehrwertdienst-Nachricht enthalten ist, wird zuverlässig ein Mißbrauch verhindert. Ein weiterer Vorteil des erfindungsgemäßen Mehrwertdienstes liegt darin, daß das Nachrichtenübertragungssystem, insbesondere Funkrufsystem, nicht durch eine Vielzahl von individuellen Nachrichten "zugestopft" wird. Dies wird bei einem Funkrufsystem in an sich bekannter Weise dadurch erreicht, indem mindestens einer Gruppe von Funkrufempfängern eine Kennung zugeordnet ist und die Mehrwertdienst-Nachricht entsprechend der Rufart Gruppenruf übermittelt wird.

Die Ausführungsform des Mehrwertdienstes nach Anspruch 2 weist den Vorteil auf, daß der Mehrwertdienstteilnehmer durch entsprechende Gebührenzahlung den Nutzungszeitraum, d.h. die Empfangsberechtigung, festlegen kann.

Werden gemäß der Ausführungsform des Mehrwertdienstes nach Patentanspruch 3 Kennung und Schlüssel verschlüsselt übertragen, so kann der Schutz gegen Mißbrauch noch weiter verbessert werden.

Die Ausführungsform des Mehrwertdienstes nach Anspruch 4 weist den Vorteil auf, daß der Mehrwertdienstbetreiber hinsichtlich der Ausgestaltung seines Gebührenabrechnungssystems nicht festgelegt ist. Auch die Abrechnung zwischen Mehrwertdienstbetreiber und Betreiber des Nachrichtenübertragungssystems kann entsprechend der bereits vorhandenen Betriebs- und Abrechnungsinfrastruktur erfolgen.

Die Ausführungsform des Mehrwertdienstes nach Anspruch 5 weist den Vorteil auf, daß der Mehrwertdienstbetreiber auf einfache Art und Weise die Empfangsberechtigung steuern kann.

Die Ausführungsform des Mehrwertdienstes nach Anspruch 6 weist den Vorteil auf, daß der über Funk übermittelte Schlüssel zuverlässig im Funkempfänger abgespeichert wird, da sichergestellt ist, daß der Funkempfänger empfangsbereit ist.

Wird gemäß der Ausführungsform des Mehrwertdienstes nach Anspruch 7 dem Mehrwertdienstteilnehmer ein Hinweis auf eine ferngesteuerte Änderung des oder der gespeicherten Schlüssel gegeben, so wird ein säumiger Mehrwertdienstteilnehmer an die fehlende Gebührenzahlung erinnert bzw. nach entsprechender Gebührenzahlung wird diese durch den Hinweis quittiert.

Die Ausführungsform des Mehrwertdienstes nach Patentanspruch 8 weist den Vorteil auf, daß durch die Programmierung der Schlüssel beim Mehrwertdienstbetreiber ein Mißbrauch zuverlässig verhindert wird. Da der Schlüssel über den Funkkanal nicht übertragen wird, kann dieser auch nicht mehr abgehört werden.

Die Erfindung wird im folgenden anhand einer in der Zeichnung dargestellten Ausführungsform näher beschrieben und erläutert.

Es zeigt:
- Fig. 1: die Netzstruktur eines Funkrufdienstes und
- Fig. 2: das Format einer Mehrwertdienst-Nachricht.

Bei der Erläuterung des erfindungsgemäßen Mehrwertdienstes wird von der Anwendung bei einem Funkrufdienst ausgegangen, dessen Struktur in Fig. 1 dargestellt ist.

Die von dem Mehrwertdienstbetreiber eingegebenen Mehrwertdienst-Nachrichten werden zu Funkrufempfängern FE übertragen. Die von empfangsbereiten Funkrufempfängern FE empfangenen Nachrichten werden decodiert und, im Falle der Empfangsberechtigung für Mehrwertdienst-Nachrichten, an einer Anzeigeeinrichtung AE des Funkrufempfängers FE angezeigt. Die Empfangsberechtigung ist dabei von einer mindestens einer Gruppe von Funkrufempfängern FE zugeordneten Kennung K und von einem in den Mehrwertdienst-Nachrichten enthaltenen Schlüssel S abhängig. Durch den Schlüssel S wird der Zeitraum der Empfangsberechtigung bestimmt. Die Kennung K und der Schlüssel S sind in einem Festwertspeicher SP (in Fig. 1 strichliniert dargestellt) oder in einem elektrisch lösch- und programmierbaren Speicher SP1 gespeichert. Als elektrisch lösch- und programmierbar Speicher SP1 kann beispielsweise ein EEPROM benutzt werden.

Die Einbuchung eines neuen Mehrwertdienstteilnehmers kann beispielsweise dadurch erfolgen, daß der Mehrwertdienstbetreiber einen Einzelruf zum Mehrwertdienstteilnehmer aussendet. Mit dem Einzelruf kann der Mehrwertdienstbetreiber den Mehrwertdienstteilnehmer auffordern, über das öffentliche Fernsprechnetz eine Verbindung zum Mehrwertdienstbetreiber aufzubauen. Ist der Gesprächszustand hergestellt, so kann der Mehrwertdienstbetreiber den Mehrwertdienstteilnehmer die entsprechenden Anweisungen für das Einbuchen mitteilen. Dies kann beispielsweise dadurch erfolgen, daß der Mehrwertdienstbetreiber über den Funkweg den Schlüssel S überträgt und ferngesteuert im EEPROM SP1 einprogrammiert. Ist der Programmiervorgang in korrekter Weise abgelaufen, so kann an der Anzeigeeinrichtung AE des Funkrufempfängers FE ein entsprechender Hinweis an den Mehrwertdienstteilnehmer gegeben werden. Damit wird eine hohe Betriebssicherheit erreicht, da bei einer erfolglosen Programmierung die entsprechende Prozedur nochmals wiederholt werden kann.

Der über den Funkkanal zusammen mit der Mehrwertdienstnachricht übertragene Schlüssel S wird von einer in der Zeichnung nicht dargestellten Steuereinrichtung mit dem im Speicher SP bzw. SP1 enthaltenen Schlüssel verglichen. Im Falle der Übereinstimmung, wird die Mehrwertdienstnachricht in einem Speicher des Funkrufempfängers FE abgespeichert oder direkt an der Anzeigeeinrichtung AE ausgegeben.

Sind gemäß der in Fig. 1 dargestellten, weiteren Ausführungsform im Speicher SP des Funkrufempfängers FE unterschiedliche Schlüssel S enthalten, so kann der Mehrwertdienstbetreiber bei Erkennung von Mißbrauch innerhalb kürzester Zeit neue Schlüssel S aktivieren und zuverlässig die Anzeige von Mehrwertdienst-Nachrichten verhindern.

Weitere Dienste desselben Mehrwertdienstbetreibers können durch verschiedene Schlüssel S unterschieden werden. Der Schlüssel kann auch entsprechend einem Synchronwort ausgestaltet und im Funkrufempfänger FE ausgewertet werden.

## Patentansprüche

1. Verfahren für einen Mehrwertdienst für ein Nachrichtenübertragungssystem mit drahtgebundenen Kanälen und/oder Funkkanälen, bei welchem eine Übertragung von durch den Mehrwertdienstbetreiber eingegeben Schlüsseln zur Kennzeichnung des Mehrwertdienstbetriebs und Nachrichten zu beweglichen Funkempfängem (FE), insbesondere Funkrufempfängern, erfolgt, bei welchem die von empfangsbereiten Funkempfängem (FE) empfangenen Schlüssel und Nachrichten decodiert werden und die Mehrwertdienst-Nachrichten an einer Anzeigeeinrichtung (AE) des Funkempfängers (FE) optisch anzeigbar sind, wobei die Empfangsberechtigung auch von einer mindestens einer Gruppe von Funkempfängem (FE) zugeordneten Kennung (K) abhängig ist,
**dadurch gekennzeichnet**, daß der Schlüssel (S) in jeder Mehrwertdienst-Nachricht enthalten ist, daß der Schlüssel (S) zusammen mit der Kennung (K) die Empfangsberechtigung bedeutet und entsprechend der Rufart Gruppenruf übermittelt wird und daß dieser in jeder Mehrwertdienst-Nachricht enthaltene Schlüssel (S) an der Anzeigeeinrichtung (AE) des Funkempfängers (FE) optisch nicht anzeigbar ist.

2. Mehrwertdienst nach Anspruch 1, **dadurch gekennzeichnet**, daß der Zeitraum der Empfangsberechtigung durch den Schlüssel (S) bestimmt ist.

3. Mehrwertdienst nach Anspruch 1 oder 2, **dadurch gekennzeichnet**, daß Kennung (K) und Schlüssel (S) verschlüsselt übertragen werden.

4. Mehrwertdienst nach einem oder mehreren der Ansprüche 1 bis 3, **dadurch gekennzeichnet**, daß Kennung (K) und Schlüssel (S) in einem Festwertspeicher (SP) oder elektrisch lösch- und programmierbaren Speicher (SP1) gespeichert sind.

5. Mehrwertdienst nach Anspruch 4, **dadurch gekennzeichnet**, daß nach einer Änderung des Schlüssels (S) durch den Mehrwertdienstbetreiber, von diesem ferngesteuert auch die im Speicher (SP, SP1) des Funkempfängers (FE) enthaltenen Schlüssel (S) änderbar sind.

6. Mehrwertdienst nach einem oder mehreren der Ansprüche 1 bis 5, **dadurch gekennzeichnet**, daß der Mehrwertdienstbetreiber den Mehrwertdienstteilnehmer durch einen Einzelruf auffordert zur Quittierung dieses Einzelrufs eine Verbindung zum Mehrwertdienstbetreiber aufzubauen und daß der Mehrwertdienstbetreiber nach Empfang der Quittung ferngesteuert die im Speicher (SP, SP1) des Funkempfängers (FE) enthaltenen Schlüssel (S) ändert.

7. Mehrwertdienst nach Anspruch 6, **dadurch gekennzeichnet**, daß an der Anzeigeeinrichtung (AE) des Funkempfängers (FE) ein Hinweis auf die ferngesteuerte Änderung des oder der gespeicherten Schlüssel (S) optisch anzeigbar ist.

8. Mehrwertdienst nach einem oder mehreren der Ansprüche 1 bis 7, **dadurch gekennzeichnet**, daß im Speicher (SP, SP1) des Funkempfängers (FE) unterschiedliche Schlüssel (S) enthalten sind und daß von dem Mehrwertdienstbetreiber ein diensteinheitliches, in der Mehrwertdienst-Nachricht versteckt angeordnetes Steuersignal zu den Funkempfängern (FE) übertragen wird, welches einen der im Speicher (SP, SP1) gespeicherten Schlüssel (S) anstelle des bisher benutzten Schlüssels (S) treten läßt.

## Claims

1. Method for an value-added service for a telecommunications transmission system having wire-connected channels and/or radio channels, in which system keys entered by the value-added service operator to identify the value-added service operation and messages to mobile radio receivers (FE), in particular radio-call receivers are transmitted, and in which system the keys and messages received by ready-to-receive radio receivers (FE) are decoded and the value-added service messages can be indicated visually on an indicating device (AE) of the radio receiver (FE), the reception authorization also being dependent on an identifier (K) assigned to at least one group of radio receivers (FE), characterized in that the key (S) is contained in every value-added service message, in that the key (S) together with the identifier (K) denotes the reception authorization and the group call is transmitted according to the type of call and in that said key (S) contained in every value-added service cannot be indicated visually on the indicating device (AE) or the radio receiver (FE).

2. Value-added service according to Claim 1, characterized in that the time interval of the reception authorization is determined by the key (S).

3. Value-added service according to Claim 1 or 2, characterized in that identifier (K) and key (S) are transmitted in enciphered form.

4. Value-added service according to one or more of Claims 1 to 3, characterized in that identifier (K) and key (S) are stored in a read-only memory (SP) or an electrically erasable and programmable memory (SP1).

5. Value-added service according to Claim 4, characterized in that, after the key (S) has been changed by the value-added service operator, the latter can also change by remote control the keys (S) contained in the memory (SP, SP1) of the radio receiver (FE).

6. Value-added service according to one or more of Claims 1 to 5, characterized in that the value-added service operator requests the value-added service subscriber by means of a single call to set up a connection to the value-added service operator to acknowledge said single call and in that, after reception of the acknowledgement, the value-added service operator changes by remote control the keys (S) contained in the memory (SP, SP1) of the radio receiver (FE).

7. Value-added service according to Claim 6, characterized in that a notification of the remote-controlled change in the stored key or keys (S) can be indicated visually on the indicating device (AE) of the radio receiver (FE).

8. Value-added service according to one or more of Claims 1 to 7, characterized in that various keys (S) are contained in the memory (SP, SP1) of the radio receiver (FE) and in that a service-standard control signal provided in concealed form in the value-added service message is transmitted to the radio receivers (FE) by the value-added service operator, which signal causes one of the keys (S) stored in the memory (SP, SP1) to replace the key (S) hitherto used.

## Revendications

1. Procédé pour un service à valeur ajoutée pour un système de transmission de messages comportant des canaux câblés et/ou des canaux hertziens, selon lequel une transmission de codes introduits par l'exploitant du service à valeur ajoutée, pour caractériser le fonctionnement du service à valeur ajoutée, et de messages à des récepteurs radio mobiles (FE), notamment des récepteurs d'appels radio, est mise en oeuvre, et selon lequel les codes et messages, qui sont reçus par les récepteurs radio (FE) prêts à la réception, sont décodés et les messages du service à valeur ajoutée peuvent être affichés optiquement dans un dispositif d'affichage (AE) du récepteur radio (FE), l'autorisation de réception dépendant également d'un indicatif (K) associé à au moins un groupe de récepteurs radio (FE),
caractérisé en ce que le code (S) est contenu dans chaque message du service à valeur ajoutée, que le code (S) indique, conjointement avec l'indicatif (K), l'autorisation de réception et qu'un appel de groupe est retransmis en fonction du type d'appel et que ce code (S), contenu dans chaque information de service à valeur ajoutée, ne peut pas être affiché optiquement dans le dispositif d'affichage (AE) du récepteur radio (FE).

2. Service à valeur ajoutée selon la revendication 1, caractérisé en ce que l'intervalle de temps de l'autorisation de réception est déterminé par le code (S).

3. Service à valeur ajoutée selon la revendication 1 ou 2, caractérisé en ce que l'indicatif (K) et le code (S) sont transmis en étant codés.

4. Service à valeur ajoutée selon une ou plusieurs des revendications 1 à 3, caractérisé en ce que l'indicatif (K) et le code (S) sont mémorisés dans une mémoire morte (SP) ou dans une mémoire (SP1) effaçable et programmable électriquement.

5. Service à valeur ajoutée selon la revendication 4, caractérisé en ce qu'après une modification du code (S) par l'exploitant du service à valeur ajoutée, les codes (S), qui sont contenus dans la mémoire (SP, SP1) du récepteur radio (FE), peuvent être également modifiés d'une manière télécommandée par l'exploitant.

6. Service à valeur ajoutée selon une ou plusieurs des revendications 1 à 5, caractérisé en ce que l'exploitant du service à valeur ajoutée demande aux abonnés du service à valeur ajoutée, sur la base d'un appel individuel, pour accuser réception de cet appel individuel, d'établir une liaison avec l'exploitant du service à valeur ajoutée, et qu'après réception de l'accusé de réception, l'exploitant du service à valeur ajoutée modifie par télécommande les codes (S) contenus dans la mémoire (SP, SP1) du récepteur radio (SE).

7. Service à valeur ajoutée selon la revendication 6, caractérisé en ce qu'une indication concernant la modification télécommandée du ou des codes (S) mémorisés peut être affichée optiquement dans le dispositif d'affichage (AE) du récepteur radio (FE).

8. Service à valeur ajoutée selon une ou plusieurs des revendications 1 à 7, caractérisé en ce que des codes différents (S) sont contenus dans la mémoire (SP,SP1) du récepteur radio (FE) et que l'exploitant du service à valeur ajoutée transmet au récepteur radio (FE) un signal de commande uniforme pour le service, qui est dissimulé dans le message de service à valeur ajoutée et qui fait intervenir un code (S) mémorisé dans la mémoire (SP,SP1), à la place du code (S) utilisé jusqu'alors.
